# EUROPÄISCHE PATENTANMELDUNG

(11) **EP 2 339 367 A1**
(43) Veröffentlichungstag der Anmeldung: **29.06.2011**
(21) Anmeldenummer: 09179560.9
(22) Anmeldetag: 17.12.2009
(51) Int. Cl.: G01S 7/481, G01S 17/42, G02B 26/08

(54) **Laserscanner**

(71) Anmelder: SIEMENS AKTIENGESELLSCHAFT, 80333 München (DE)
(72) Erfinder: Scheibner, Dirk, Dr., 90473 Nürnberg (DE); Thamm, Peter, Dr., 69469 Weinheim (DE); Völkel, Thomas, 90518 Altdorf (DE); Zettner, Jürgen, Dr., 90587 Veitsbronn (DE)

(57) **Zusammenfassung**

Erfindungsgemäß wird ein Laserscanner (1) zur Objekterfassung nach dem Laufzeitprinzip, mit einer Laserquelle (2) und mit einem Spiegel (3) zur Umlenkung eines von der Laserquelle (2) ausgesendeten Laserstrahls (11) vorgeschlagen, der folgende Merkmale aufweist:
a) Der Spiegel (3) ist als mikroelektromechanischer Kippspiegel ausgeführt und zu einer taumelnden Schwingbewegung derart anregbar, dass der vom Kippspiegel reflektierte Laserstrahl (11) eine Bahn mit einem räumlichen Öffnungswinkel beschreibt;
b) mit einem rotationssymmetrischen, verspiegelten Ablenkkörper (4), der zur Ablenkung des Laserstrahls zu einem zu erfassenden Objekt (13) dient, das außerhalb der Rotationsachse des Ablenkkörpers (4) liegt,
c) mit einem Detektor (5) zur Detektion des vom Objekt (13) in Richtung des Detektors (5) reflektierten Laserstrahls (11) und
d) mit einer Ansteuer- und Auswerteelektronik (6), die zur Ansteuerung der Laserquelle (2), zur Anregung der taumelnden Schwingbewegung des Spiegels (3) und zur Auswertung des vom Detektor (5) detektierten Laserstrahls (11) dient, wobei Mittel zur Synchronisation der Bewegung des Spiegels (3) und des Orts am Detektor (5), an dem der Laserstrahl (11) detektiert wird, vorgesehen sind.

## Beschreibung

### Beschreibung

### Laserscanner

Die Erfindung betrifft einen Laserscanner zur Objekterfassung nach dem Triangulationsprinzip, mit einer Laserquelle und mit einem Spiegel zur Umlenkung eines von der Laserquelle ausgesendeten Laserstrahls.

Derartige Laserscanner werden von verschiedenen Firmen vertrieben. Dabei wird u.a. ein von einem Motor angetriebener Drehspiegel verwendet, der einen Lasterstrahl rotierend nach außen ablenkt. Theoretisch kann auf diese Weise der gesamte Bereich um den Laserscanner überdeckt werden. Typische Geräte werten einen Winkelbereich von ca. 180° aus. Trifft der ausgesandte Laserstrahl auf ein Hindernis, wird er reflektiert. Dieses reflektierte Signal wird über den Drehspiegel wieder eingefangen und auf einen Fotodetektor gelenkt. Anhand der Spiegelstellung und der Laufzeit wird der Ort des Hindernisses ermittelt. Die Ausführung mit dem Drehspiegel ist mit einem hohen technischen und finanziellen Aufwand verbunden, um die angestrebte Zuverlässigkeit zu gewährleisten.

Der Erfindung liegt daher die Aufgabe zugrunde, einen Laserscanner der oben genannten Art vorzuschlagen, der eine hohe Flexibilität bietet und eine Raumüberwachung bei geringem Aufwand ermöglicht.

Die Aufgabe wird mit den Merkmalen nach Anspruch 1 gelöst. Dabei umfasst der Laserscanner folgende Merkmale:
a) Der Spiegel ist als mikroelektromechanischer Kippspiegel ausgeführt und zu einer taumelnden Schwingbewegung derart anregbar, dass der vom Spiegel reflektierte Laserstrahl eine Bahn mit einem räumlichen Öffnungswinkel beschreibt;
b) mit einem rotationssymmetrischen, verspiegelten Ablenkkörper, der zur Ablenkung des Laserstrahls zu einem zu erfassenden Objekt dient, das außerhalb der Rotationsachse des Ablenkkörpers liegt;
c) mit einem Detektor zur Detektion des vom Objekt in Richtung des Detektors reflektierten Laserstrahls und
d) mit einer Ansteuer- und Auswerteelektronik, die zur Ansteuerung der Laserquelle, zur Anregung der taumelnden Schwingbewegung des Spiegels und zur Auswertung des vom Detektor detektierten Laserstrahls dient, wobei Mittel zur Synchronisation der Bewegung des Spiegels und des Orts am Detektor, an dem der Laserstrahl detektiert wird, vorgesehen sind.

Eine vorteilhafte Weiterbildung des mikromechanischen Sensors besteht, wenn gemäß Anspruch 2 der Spiegel eine Spiegelplatte, Federaufhängungen und Ansteuerelektroden aufweist.

Außerdem ist es vorteilhaft, wenn gemäß Anspruch 3 der Ablenkkörper in der Form eines Kegelstumpfs ausgeführt ist.

Eine vorteilhafte Weiterbildung des mikromechanischen Sensors besteht, wenn gemäß Anspruch 4 der Ablenkkörper in der Form einer Halbkugel ausgeführt ist.

Weiterhin ist es vorteilhaft, wenn gemäß Anspruch 5 der Detektor ringförmig um den Lichtaustritt ausgeführt ist.

Eine weitere sehr vorteilhafte Ausführungsform besteht, wenn gemäß Anspruch 6 ein Neigungssensor vorgesehen ist, der zur Detektion der Neigung des Lacerscanners gegenüber seiner Normalposition dient.

Ein Ausführungsbeispiel der Erfindung wird im Folgenden anhand einer Zeichnung näher erläutert. Es zeigen:
FIG 1 den grundsätzlichen Aufbau eines erfindungsgemäßen Laserscanners und
FIG 2 den grundsätzlichen Aufbau eines mikroelektromechanischen Kippspiegels.

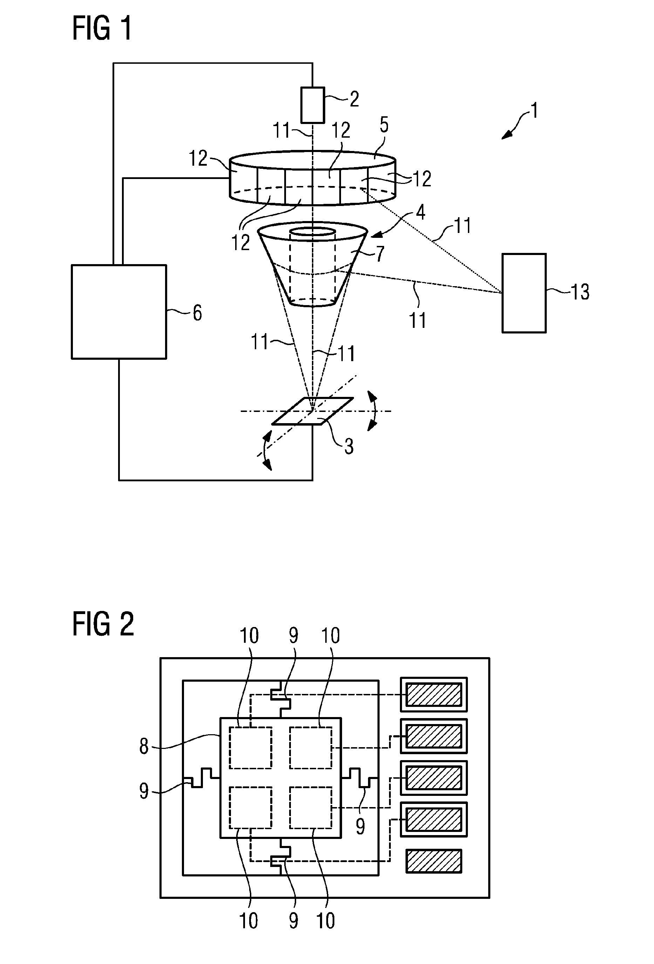

In FIG 1 ist der grundsätzliche Aufbau des erfindungsgemäßen Laserscanners 1 dargestellt. Er weist eine Laserquelle 2, einen mikroelektromechanischen Kippspiegel 3, einen rotationssymmetrischen, verspiegelten Ablenkkörper 4, einen Detektor 5 sowie eine Ansteuer- und Auswerteelektronik 6 auf. Im vorliegenden Ausführungsbeispiel ist der fest gelagerte rotationssymmetrische Ablenkkörper 5 in Form eines Kegelstumpfes ausgebildet, jedoch sind auch andere Formen, z.B. eine Halbkugelform, möglich. Der ebenfalls fest gelagerte Detektor 5 ist gemäß FIG 1 ringförmig mit einer Vielzahl von Segmenten 12 an der Umfangsfläche 7 ausgeführt. Der mikroelektromechanische Kippspiegel 3 hat einen elektrostatischen Antrieb und weist hier in bekannter Weise eine Spiegelplatte 8, Federaufhängungen 9 und Ansteuerelektroden 10 wie in FIG 2 dargestellt auf.

Die Ansteuer- und Auswerteelektronik 6 steuert einerseits die Laserquelle 2 zur Aussendung eines Laserstrahls 8 an und regt andererseits den mikroelektromechanischen Kippspiegel 3 über seine Ansteuerelektroden 10 zu einer taumelnden Schwingbewegung an. Durch diese wird der auf den Kippspiegel 3 auftreffende Laserstrahl 11 derart abgelenkt, dass er eine Bahn mit einem räumlichen Öffnungswinkel beschreibt. Vom Kippspiegel 3 wird der Laserstrahl auf die Umfangsfläche des rotationssymmetrischen Ablenkkörpers 4 hinreflektiert, der gemäß FIG 1 die Form eines Kegelstumpfes aufweist. Da seine Rotationsachse mit dem Verlauf des Laserstrahls 11 von der Laserquelle 2 zum Kippspiegel 3 zusammentrifft, lässt sich mit einer entsprechenden taumelnden Schwingbewegung des Kippspiegels 3 erreichen, dass die Punkte auf dem kegelstumpfförmigen Ablenkkörpers 4, auf die der Laserstrahl 11 auftrifft und an denen er reflektiert wird, im Sonderfall auf einem Kreis liegen. Der Laserstrahl 11 wird von dem Ablenkkörper 4 entsprechend der Schwingfrequenz des Kippspiegels 3 und abhängig vom Reflexionswinkel von der Rotationsachse des Ablenkkörpers 4 weg nach außen abgelenkt, wodurch eine Rundumprojektion des Laserstrahls 11 erreicht wird. Trifft der Laserstrahl 11 dabei auf ein Objekt 13, wird dieser zumindest zum Teil in Richtung zur Rotationsachse des Ablenkkörpers 4 zurückreflektiert und dabei vom Detektor 5, z.B. durch eines der Segmente 12 des Detektorrings erfasst. Vom Detektor 5 wird ein entsprechendes Signal zur Auswertung an die Ansteuer- und Auswerteelektronik 6 weitergeleitet. Aufgrund der Auswertung des Strahlengangs des Laserstrahls 11 und seiner Laufzeit kann der Reflektionsort an dem Objekt 13 bestimmt und abgebildet werden. Hierzu muss allerdings durch entsprechende Mittel zur Synchronisation in der Ansteuer- und Auswerteelektronik 6 sichergestellt werden, dass die Bewegung des mikroelektromechanischen Kippspiegels 3 und der Ort am Detektor 5, an dem der Laserstrahl 11 detektiert wird, miteinander synchronisiert sind. Durch die Erfassung einer Vielzahl von Objektpunkten in der oben beschriebenen Weise kann eine Aussage bezüglich der Größe des Objekts 13 getroffen werden.

Durch Veränderung des Reflexionswinkels am Ablenkkörper 4 lassen sich auch Objekte 13 erfassen, die entweder weiter oben oder unten liegen. Andererseits ist aber auch auf diese Weise die Höhenausdehnung eines Objekts 13 erfassbar.

Der Laserscanner 1 besitzt aufgrund der beiden Freiheitsgrade, nämlich zum einen die Variation der taumelnden Schwingbewegung des Kippspiegels 3 und zum anderen die mögliche unterschiedliche Ausgestaltung des Ablenkkörpers 4, eine hohe Flexibilität. Diese ermöglicht einerseits Fertigungstoleranzen auszugleichen und andererseits den umgebenden Raum in seiner Gesamtheit durch entsprechende Lenkung des Laserstrahls 11 hinsichtlich vorhandener Objekte zu überwachen.

Da eine Neigung des Laserscanners 1 gegenüber seiner Normalstellung nicht in jedem Fall auszuschließen ist, kann der Laserscanner 1 mit einem hier nicht dargestellten Neigungssensor ausgestattet sein, der den Neigungswinkel des Laserscanners 1 misst. Die sich hieraus ergebende Änderung der taumelnden Schwingbewegung des Kippspiegels 3 kann durch entsprechende Ansteuerung korrigiert werden, ohne dass eine Justierung in die Normalstellung erforderlich ist.

## Patentansprüche

1. Laserscanner (1) zur Objekterfassung nach dem Laufzeitmessungsprinzip, mit einer Laserquelle (2) und mit einem Spiegel (3) zur Umlenkung eines von der Laserquelle (2) ausgesendeten Laserstrahls (11) mit folgenden Merkmalen:
a) Der Spiegel (3) ist als mikroelektromechanischer Kippspiegel ausgeführt und zu einer taumelnden Schwingbewegung derart anregbar, dass der vom Spiegel (3) reflektierte Laserstrahl (11) eine Bahn mit einem räumlichen Öffnungswinkel beschreibt;
b) mit einem rotationssymmetrischen, verspiegelten Ablenkkörper (4), der zur Ablenkung des Laserstrahls (11) zu einem zu erfassenden Objekt (13) dient, das außerhalb der Rotationsachse des Ablenkkörpers (4) liegt;
c) mit einem Detektor (5) zur Detektion des vom Objekt (13) in Richtung des Detektors (5) reflektierten Laserstrahls (11) und
d) mit einer Ansteuer- und Auswerteelektronik (6), die zur Ansteuerung der Laserquelle (2), zur Anregung der taumelnden Schwingbewegung des Spiegels (3) und zur Auswertung des vom Detektor (5) detektierten Laserstrahls (11) dient, wobei Mittel zur Synchronisation der Bewegung des Spiegels (3) und des Orts am Detektor (5), an dem der Laserstrahl (11) detektiert wird, vorgesehen sind.

2. Laserscanner nach Anspruch 1, **dadurch gekennzeichnet, dass** der Spiegel (3) eine Spiegelplatte (8), Federaufhängungen (9) und Ansteuerelektroden (10) aufweist.

3. Laserscanner nach Anspruch 1 oder 2, **dadurch gekennzeichnet, dass** der Ablenkkörper (4) in der Form eines Kegelstumpfs ausgeführt ist.

4. Laserscanner nach Anspruch 1 oder 2, **dadurch gekennzeichnet, dass** der Ablenkkörper (4) in der Form einer Halbkugel ausgeführt ist.

5. Laserscanner nach einem der vorangehenden Ansprüche, **dadurch gekennzeichnet, dass** der Detektor (5) ringförmig ausgeführt ist.

6. Laserscanner nach einem der vorangehenden Ansprüche, **dadurch gekennzeichnet, dass** ein Neigungssensor zur Detektion des Neigungswinkels des Laserscanners (1) gegenüber seiner Normalposition dient.
